# EUROPEAN PATENT SPECIFICATION

(11) **EP 2 062 186 B1**
(45) Date of publication and mention of the grant of the patent: **30.03.2011**
(21) Application number: 07803121.8
(22) Date of filing: 31.08.2007
(51) Int. Cl.: G06F 21/00

(54) **METHOD FOR GENERATING HUMAN-READABLE AND MACHINE-READABLE DOCUMENTS**
VERFAHREN ZUM ERZEUGEN VON MENSCHENLESBAREN UND MASCHINENLESBAREN DOKUMENTEN
PROCÉDÉ PERMETTANT DE GÉNÉRER DES DOCUMENTS INTERPRÉTABLES PAR L'UTILISATEUR ET ASSIMILABLES PAR MACHINE

(30) Priority: 16.09.2006 EP 06019428
(43) Date of publication of application: 27.05.2009
(73) Proprietor: Thomson Licensing, 92130 Issy-les-Moulineaux (FR)
(72) Inventor: KRÜGER, Roland, 46325 Borken (DE)
(74) Representative: Hartnack, Wolfgang
(86) International application number: PCT/EP2007/059134
(87) International publication number: WO 2008/031732

(56) References cited:
- WO-A-03/017641
- JP-A- 2004 357 058
- US-A1- 2003 131 229
- "XSL-FO Tutorial and Samples" [Online] April 2006 (2006-04), ECRION SOFTWARE INC. , XP002418844 Retrieved from the Internet: URL:http://web.archive.org/web/20060418100 300/http://www.ecrion.com/XF/PDF/XSL-FOTut orial.pdf> [retrieved on 2007-02-06] page 4, lines 1-15 page 43 - page 48 figures 26,27
- "DAML Services - Security and Privacy" [Online] 29 November 2004 (2004-11-29), , DAML SERVICES , XP002418845 Retrieved from the Internet: URL:http://www.daml.org/services/owl-s/sec urity.html> [retrieved on 2007-02-07] page 1, lines 1-29

## Description

The invention relates to a method for creating a human-readable document which, besides at least one data record, comprises at least one item of semantic information describing the data record, semantics for short.

### Background

Handling information which is in electronic form firstly requires a data structure which stipulates the organisation of the available data information and secondly requires a description explaining the data information in more detail. If, on the one hand, standardised data formats, for example ASCII, XML, HTML or TeX etc., are used to stipulate the data structure then semantic information allows the meaning of the individual items of data information to be described in more detail. The use of templates, for example, which can have data information added to them at particular place holders which exist allows semantic interpretation of the individual items of data information.

Without knowledge of the semantic information, semantics for short, the data record [200, 4000] may mean that 200 bottles of ABC solution cost 4000 euros, for example, but it could equally also be that the article with article number 200 is still in stock to the tune of 4000 in the warehouse.

In practical dealings with data in electronic form, it is usually difficult to easily reconstruct the semantic interpretation at pure data record level, which means that visualisation, i.e. conversion of the information which is in electronic form into a human-readable representation, is necessary on the basis of the respective present data record with semantics describing the individual items of data information. Frequently, this is done by producing a PDF document, for example, which allows the visual implementation. Not until there is a human-readable representation is it possible for a human observer to clearly grasp the respective data-record-specific semantic interpretation in addition to the contained data.

Global networking and the associated possibility of worldwide data interchange mean that increasing significance is being attached to the conversion of information which is in electronic form into human-readable representations, for example in the form of PDF documents. Thus, on the basis of national laws, documents in electronic form and their transmission via the Internet are gaining a legally binding nature and also legal acceptance with offices and authorities. In this regard, reference is made to the signature act decreed for the Federal Republic of Germany, which prescribes constraints which need to be met if electronic documents, for example in the form of invoices, are to be considered as permanent evidential papers for offices and authorities. In this context, a central role is played by the embedding of electronic signatures in the documents in order to ensure legal certainty and obligation for the interchange of electronic data records.

In this case, however, the problem arises regarding what contents of a document in electronic form are signed or need to be signed. If only the content of the data record is electronically signed, for example, manipulation or modification of the semantics would not be reconstructable further on account of the lack of signature, which means that it is not possible to ensure that the entire electronic document is legally binding. If, by contrast, the semantic information content is also signed then although the document is legally binding, on the one hand, in practice it is difficult for a recipient of a data record signed in this manner to reconstruct the semantic interpretation at data record level, which means that human-readable visualisation of the data record is necessary, which in most cases, as already mentioned above, is done by producing a PDF document. It is debatable in this context, however, whether all the details of the data record are indicated in the human-readable PDF document and the meaning of the actually indicated data is not falsified by changes or overwrites. To reduce the magnitude of the problem, the PDF document is frequently only signed in total, i.e. exclusively the human-readable representation. Since the PDF document has a very complex structure, however, it is unclear, particularly on the part of the signing party, what contents need to be signed or additionally signed. By way of example, despite a human-readable representation a PDF document may contain information which is invisible to humans, such as white text on a white background or data contents which are situated outside what is known as the viewing area of the PDF document.

The Japanese Patent publication number JP 2004 357058 discloses a system for electronic document authentication in the context of e-commerce. The system generates a document based on a document template and record data. An authentication via a seal is needed for using the variable data, which then permit the generation of a complete authenticated document. This system, however, does not address the role of semantic descriptions of the record data in the authentication process.

### Invention

A problem to be solved by the invention is to specify a method for creating a human-readable document which, besides at least one data record, comprises at least one item of semantic information describing the data record, semantics for short, such that firstly all demands on the legally binding nature of documents in electronic form are met and secondly transparent reconstruction of signed data contents becomes possible both for the signing party and for the recipient of a document in electronic form.

This problem is solved by the method disclosed in claim 1. A corresponding human-readable document that utilises this method is disclosed in claim 12. A corresponding verification is disclosed in claim 16.

According to the invention, the method for creating a human-readable document is compiled from the following steps. First, it is necessary to provide the data record and the semantics describing the data record in respective digital form. Next, the data record and the semantics are signed together or separately from one another using known signing methods. Before or after the signature step, the at least one data record and the semantics describing the data record are taken as a basis for producing a human-readable representation of the document which is either shown in graphical editing or format on a display or can be in the form of a printed product. The signed data record and the signed semantics are then integrated into the human-readable representation such that it is possible to extract the signed data record and the signed semantics from the human-readable representation and that the extracted, signed data record and the extracted, signed semantics can be taken as a basis for producing an idempotent, i.e. largely identical, human-readable representation of the original document. In this context, idempotent means that it is possible to take a document created in line with the inventive method and check the signature(s) of the data record and the semantics and the inventive method-based visualisation of the data record in human-readable representation in order to recreate a document which is identical to the original document in a relevant sense. This identity proves that the human-readable representation obtained is a valid representation of the underlying data signed electronically by the document creator.

The human-readable document which is produced according to the invention thus contains objects which can be extracted from the document and which can be taken as a basis for producing the document itself, hence also the property of an idempotent document. In addition, the signed objects which can be extracted from the document, i.e. the signed data record and the signed semantics, can be verified using likewise conventional programming tools so that for both, the signing party and for a recipient of the document, the document is provided with the legally binding nature which is required for many instances of application.

In principle, it is of no significance what the data record's language standard is; usual language standards are HTML, ASCII, XML or TeX.

Frequently, a data record's data are in ASCII format, for whose semantic description the data are entered into a template which is likewise in ASCII format. The ASCII data record and the ASCII template can be converted by means of conventional display programs into a human-readable representation, such as a Word or PDF file, which can be visually displayed on the screen or printed in analogue form using a printer. During or after production of the human-readable representation of the document, the invention involves the ASCII data record and the ASCII template respectively being integrated in signed form into the human-readable representation, either in a manner which is visible to humans, for example in the form of a bar code, or in a manner which is invisible to humans, for example in the form of an invisible watermark. Regardless of the respectively chosen form of integration, the human-readable representation of the document thus additionally contains signed content data and the latter's associated signed interpretation description, which can both be verified independently of one another. If there are doubts as to the authenticity of the representation of the contents or the semantics, for example, then it is possible to resort to the content data and to the semantics description by means of the extraction described above. Furthermore, it is also possible for the generation process for the human-readable representation of the document to be reconstructed completely from the signed content data and the signed semantics.

Regardless of the method described above, a human-readable document having at least one data record and an item of semantic information describing the data record, semantics for short, is likewise described in which, in line with the invention, the at least one data record and the semantics are respectively integrated in signed form such that the signed data record and the semantics can be extracted from the document. The extracted signed data record and the extracted signed semantics can be taken as a basis for reproducing an idempotent, human-readable representation of the document. It is thus possible to use the idempotent, human-readable representation of the document to verify said document in terms of the originality and authenticity of the document. Further details in this regard can be taken from the rest of the description with reference to the exemplary embodiments below.

In principle, the inventive method is suited for creating a human-readable document which, besides at least one data record, comprises at least one item of semantic information describing the data record, semantics for short, said method including the steps:
- providing the at least one data record and the at least one semantics in respective digital form;
- electronically signing the data record and the semantics to produce a signed data record and a signed semantics, and producing a human-readable representation of the document on the basis of the at least one data record and the at least one semantics item;
- integrating the signed data record and the signed semantics into the human-readable representation such that it is possible to extract the signed data record and the signed semantics from the human-readable representation and that the extracted, signed data record and the extracted, signed semantics can be taken as a basis for producing an idempotent, human-readable representation of the document.

In principle the inventive human-readable document has at least one data record and an item of semantic information describing the data record, semantics for short, wherein the document integrates the at least one data record and the semantics in respective electronically signed form such that the signed data record and the semantics can be extracted from the document and that the extracted, signed data record and the extracted signed semantics can be taken as a basis for producing an idempotent, human-readable representation of the document.

Advantageous additional embodiments of the invention are disclosed in the respective dependent claims.

### Drawings

Exemplary embodiments of the invention are described with reference to the accompanying drawings, which show in:
- Fig. 1: process chain diagram for the creation of a signed data record;
- Fig. 2: representation of a signed data record and of the signed semantics within the context of a 2D matrix code;
- Fig. 3: illustration of the method steps for creating an idempotent, human-readable representation of the document.

### Exemplary embodiments

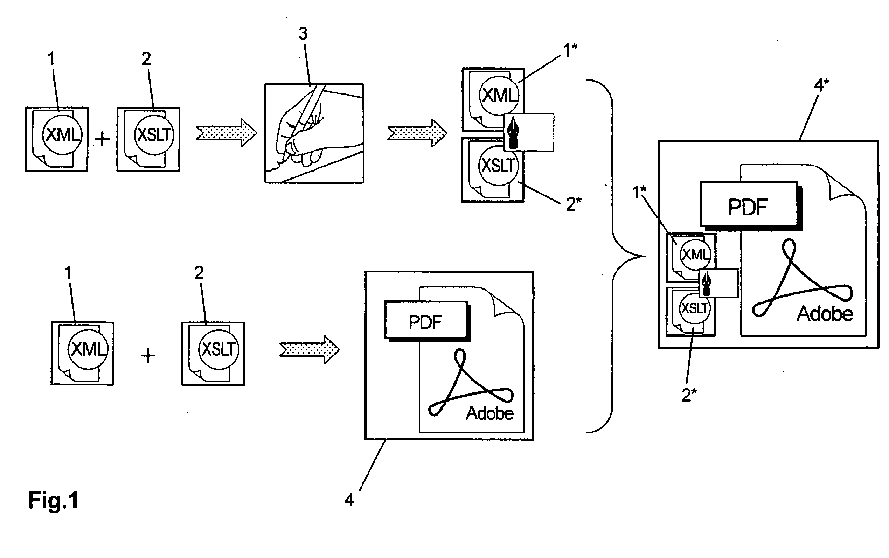

The top process chain in Fig. 1 shows a process chain diagram for the creation of a signed data record 1* and of signed semantics 2*. It is assumed that the language standard chosen for representing the data record 1 is XML, which can be considered as a widely used standard for creating machine-readable and human-readable documents. For the semantic description of the data contents, what is known as an XSL transformation 2 is used, which transforms the data 1 in XML using what is known as an XSLT stylesheet 2, in which the XML data 1 are added to semantics describing said data. The XML standard represented data 1 and the XSLT transformation represented semantics 2 are signed separately from one another or together with one another using a known signature technique, for example using XML-DSIG, in the method step shown by reference symbol 3 in Fig. 1. The result obtained is a signed data record 1* and the corresponding signed semantics 2*.

Separately from the electronic or digital signature described above, a human-readable representation 4 of the document is created as a PDF document, namely on the basis of the XML data record 1 and the XSL transformation 2 representing the semantics (see bottom process chain in Fig. 1). The curly bracket shown in Fig. 1 represents the integration step, in which the signed data record 1* and the signed semantics 2* are embedded into the human-readable representation 4 of the document. The human-readable representation 4* complemented in this manner by the signed data record 1* and the signed semantics 2* represents an inventive document that provides the option of verifying the document through idempotent emulation.

Using suitable reading and extraction techniques, the signed data record 1* and the signed semantics 2* can be extracted from the human-readable representation of the document 4*, extended in line with the invention, and said representation can be taken as a basis for producing a further document 4', which is idempotent, i.e. largely identical, to the originally human-readable representation 4 of the document, said idempotent document being able to be checked using inherently known verification techniques.

The signed data record 1* and the signed semantics 2* can be integrated into the human readable representation of document 4* either using a bar code which is visible to humans, for example a two-dimensional matrix code, or else in invisible fashion, for example using known watermark technology. In both cases, extraction techniques are known which can be used to extract the relevant signed document contents for the subsequent verification from the complemented document 4*.

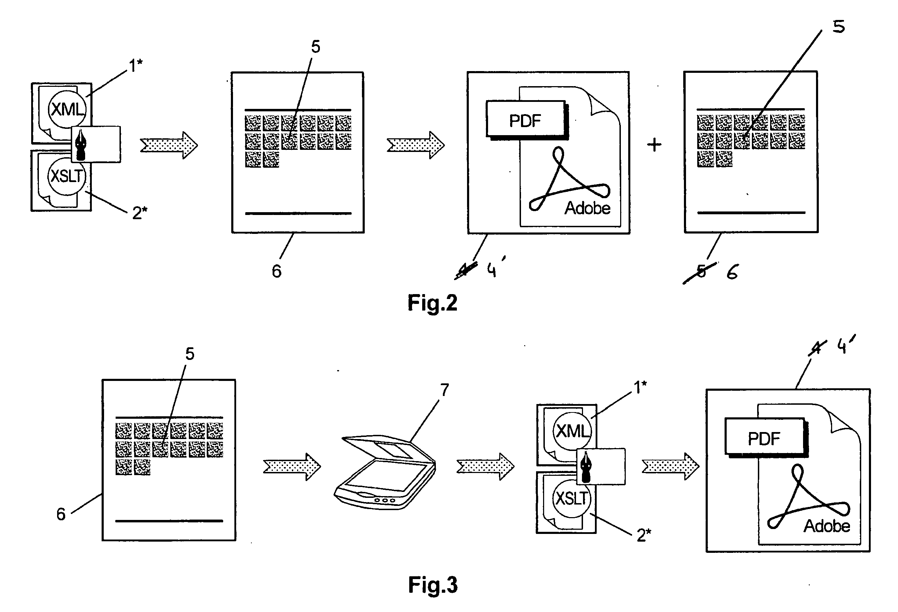

Fig. 2 shows the option of representing the signed data record 1* and the signed semantics 2* within the context of a 2D matrix code 5, which is printed or displayed on a screen as a separate supplementary sheet 6 for the actual, human-readable representation 4 of the document, for example likewise in PDF format. Usually, both the human-readable representation 4 and the 2D matrix code 5 are stored in a common PDF file.

Fig. 3 shows the steps for idempotent emulation of the document 4, the starting point being a 2D matrix code 5 which is on the supplementary sheet 6 in human-readable analog form. The supplementary sheet 6 is read using a suitable bar code reader 7 which is able to extract both the signed data record 1* and the signed semantics 2* from the supplementary sheet 6 in electronic form.

As an alternative, in case the document is a digital one having the format of the above-described complemented human-readable representation 4*, the signed data record 1* and the signed semantics 2* are extracted from the corresponding data file.

The resulting electronic form can be taken as a basis for creating an idempotent identical-content emulation of the human-readable document 4 which is able to be subjected to verification: Using the components retrieved in such way, the processing depicted in the lower section of Fig. 1 is carried out again in order to provide a human-readable representation, by using a trustworthy representation component. Thereafter, on one hand the signatures of the data record 1* and the semantics 2* are checked, and on the other hand the conformance or authenticity of the newly retrieved human-readable representation of the document with the original human-readable representation of the document, in printed or digital format, is checked. The conformance or identity of both human-readable representation proves that the content or meaning of the document as intended by the original author of the document is represented correctly in the presented human-readable representation.

Using the inventive method and the human-readable representation of a document which can be produced using said method, it is possible to carry out authorised distribution of documents, for example in the form of PDF files, in verifiable fashion by verifying the authenticity of the respectively distributed document. It is also possible to check the confidentiality status of human-readable representations in simple fashion. Furthermore, the inventive method permits automated marking of human-readable representations of documents as confidential by virtue of the semantics, for example in the form of an XSL transformation, being marked in suitable fashion. It is also possible to add further information to the human-readable representation of the document, such as the name of the author or the address of the distributor.

## Claims

1. Method for creating a human-readable document (4*) which, besides at least one data record, comprises at least one item of semantic information describing the data record, semantics for short, said method being **characterised by** the steps:
- providing the at least one data record (1) and the at least one semantics item (2) in respective digital form;
- electronically signing (3) the data record and the semantics to produce a signed data record (1*) and a signed semantics (2*), and producing a human-readable representation (4) of the document on the basis of the at least one data record (1) and the at least one semantics item (2);
- Creating a human readable document (4*) by integrating the signed data record (1*) and the signed semantics (2*) into the human-readable representation (4) such that it is possible to extract the signed data record (1*) and the signed semantics (2*) from the human-readable representation and that the extracted, signed data record (1*) and the extracted, signed semantics (2*) can be taken as a basis for producing an idempotent, human-readable representation of the document (4').

2. Method according to claim 1, wherein the data record (1) is represented using one of the following language standards: HTML, ASCII, XML, TeX.

3. Method according to claim 1 or 2, wherein the semantics (2) are represented in the form of a template into which the data record is entered.

4. Method according to claim 3, wherein the template is an XSLT stylesheet into which the data record in the form of an XML file is converted by means of XSL transformation.

5. Method according to one of claims 1 to 4, wherein the human-readable representation (4) chosen is a PDF representation.

6. Method according to one of claims 1 to 5, wherein the human-readable representation of the document (4) is produced using an FOP program, i.e. form processor.

7. Method according to one of claims 1 to 6, wherein a data record (1) in XML is electronically signed using a signature standard XML-DSIG.

8. Method according to one of claims 1 to 7, wherein the extracted signed data record (1*) and the extracted signed semantics (2*) are subjected to verification.

9. Method according to one of claims 1 to 8, wherein the idempotent, human-readable representation of the document (4') is subjected to verification.

10. Method according to one of claims 1 to 9, wherein the signed data record (1*) and the signed semantics (2*) are integrated into the human-readable representation (4) in encrypted form, e.g. a one-dimensional or a two-dimensional bar code or a watermark.

11. Human-readable document (4*) having at least one data record and an item of semantic information describing the data record, semantics for short, **characterised in that** the document integrates the at least one data record (1) and the semantics (2) in respective electronically signed form such that the signed data record (1*) and the semantics (2*) can be extracted from the document (4*) and that the extracted, signed data record (1*) and the extracted signed semantics (2*) can be taken as a basis for producing an idempotent, human-readable representation of the document (4').

12. Human-readable document (4*) according to claim 11, wherein the signed data record (1*) and the signed semantics (2*) are integrated into the human-readable representation of the document (4) in a form which cannot be perceived by humans.

13. Human-readable document (4*) according to claim 12, wherein the form which cannot be perceived by humans is a watermark.

14. Human-readable document (4*) according to claim 13, wherein the signed data record (1*) and the signed semantics (2*) are integrated into the human-readable representation of the document (4) in the form of a bar code.

15. Method for verifying a human-readable document (4*) having at least one signed data record (1*) and at least one signed item of semantic information (2*) describing the data record, semantics for short, **characterised by** the steps:
a) extracting and providing (7) in a digital format the at least one signed data record (1*) and the at least one signed semantics (2*);
b) producing a human-readable representation (4') of the document on the basis of the at least one data record and the at least one semantics item;
c) verifying the signatures of said data record and said semantics item;
d) comparing the original human-readable representation of the document (4*) with the human-readable representation (4') of the document as produced by step b);
e) in case of identity, deciding that said human-readable representation (4') of the document as produced by step b) corresponds to said original human-readable representation of the document (4).

## Patentansprüche

1. Verfahren zum Erstellen eines von Menschen lesbaren Dokuments (4*), das außer wenigstens einem Datensatz wenigstens ein Element mit semantischen Informationen, die den Datensatz beschreiben, kurz Semantik, umfasst, wobei das Verfahren durch die Schritte **gekennzeichnet** ist:
- Vorsehen des wenigstens einen Datensatzes (1) und des wenigstens einen des Semantik-Elements (2) in digitaler Form;
- elektronisches Signieren (3) des Datensatzes und der Semantik, um einen signierten Datensatz (1*) und eine signierte Semantik (2*) zu erzeugen, und um eine von Menschen lesbare Darstellung (4) des Dokuments auf der Basis des wenigstens einen Datensatzes (1) und des wenigstens einen Semantik-Elements (2) zu erzeugen;
- Erstellen eines von Menschen lesbaren Dokuments (4*) durch Integrieren des signierten Datensatzes (1*) und der signierten Semantik (2*) in die von Menschen lesbare Darstellung (4), so dass es möglich ist, den signierten Datensatz (1*) und die signierte Semantik (2*) aus der von Menschen lesbaren Darstellung herauszuziehen und der herausgezogene signierte Datensatz (1*) und die herausgezogene signierte Semantik (2*) als Basis zur Erzeugung einer idempotenten, von Menschen lesbaren Darstellung des Dokuments (4') genommen werden können.

2. Verfahren nach Anspruch 1, bei dem der Datensatz (1) unter Verwendung einer der folgenden Sprachnormen: HTML, ASCII, XML, TeX dargestellt wird.

3. Verfahren nach Anspruch 1 oder 2, bei dem die Semantik (2) in Form eines Templates dargestellt wird, in das der Datensatz eingegeben wird.

4. Verfahren nach Anspruch 3, bei dem das Template eine XSLT-Formatvorlage ist, in die der Datensatz in Form einer XML-Datei mittels XSL-Transformation umgewandelt wird.

5. Verfahren nach einem der Ansprüche 1 bis 4, bei dem die gewählte, von Menschen lesbare Darstellung (4) eine PDF-Darstellung ist.

6. Verfahren nach einem der Ansprüche 1 bis 5, bei dem die von Menschen lesbare Darstellung des Dokuments unter Verwendung eines FOP-Programms, d. h. eines Formprozessors, erzeugt wird.

7. Verfahren nach einem der Ansprüche 1 bis 6, bei dem ein Datensatz (1) in XML elektronisch unter Verwendung einer Signaturnorm XML-DSIG signiert wird.

8. Verfahren nach einem der Ansprüche 1 bis 7, bei dem der herausgezogene signierte Datensatz (1*) und die herausgezogene signierte Semantik (2*) einer Verifikation unterworfen werden.

9. Verfahren nach einem der Ansprüche 1 bis 8, bei dem die idempotente, von Menschen lesbare Darstellung des Dokuments (4') einer Verifikation unterworfen wird.

10. Verfahren nach einem der Ansprüche 1 bis 9, bei dem der signierte Datensatz (1*) und die signierte Semantik (2*) in die von Menschen lesbare Darstellung (4) in verschlüsselter Form integriert werden, z. B. als eindimensionaler oder zweidi-, mensionaler Strichcode oder als Wasserzeichen.

11. Von Menschen lesbares Dokument (4*), das wenigstens einen Datensatz und ein Element mit semantischen Informationen, die den Datensatz beschreiben, kurz Semantik, aufweisen, **dadurch gekennzeichnet, dass** das Dokument den wenigstens einen Datensatz (1) und die Semantik (2) in entsprechend elektronisch signierter Form integriert, so dass der signierte Datensatz (1*) und die Semantik (2*) aus dem Dokument (4*) herausgezogen werden können und der herausgezogene signierte Datensatz (1*) und die herausgezogene signierte Semantik (2*) als Basis zur Erzeugung einer idempotenten, von Menschen lesbaren Darstellung des Dokuments (4') genommen werden können.

12. Von Menschen lesbares Dokument (4*) nach Anspruch 11, bei dem der signierte Datensatz (1*) und die signierte Semantik (2*) in die von Menschen lesbare Darstellung des Dokuments (4) in einer Form integriert werden, die von Menschen nicht wahrgenommen werden kann.

13. Von Menschen lesbares Dokument (4*) nach Anspruch 12, bei dem die Form, die von Menschen nicht wahrgenommen werden kann, ein Wasserzeichen ist.

14. Von Menschen lesbares Dokument (4*) nach Anspruch 13, bei dem der signierte Datensatz (1*) und die signierte Semantik (2*) in die von Menschen lesbare Darstellung des Dokuments (4) in Form eines Strichcodes integriert werden.

15. Verfahren zum Verifizieren eines von Menschen lesbaren Dokuments (4*), das wenigstens einen signierten Datensatz (1*) und wenigstens ein signiertes Element mit semantischen Informationen (2*), die den Datensatz beschreiben, kurz Semantik, aufweist, **gekennzeichnet durch** die Schritte:
a) Herausziehen und Liefern (7) in digitalem Format den wenigstens einen signierten Datensatz (1*) und die wenigstens eine signierte Semantik (2*);
b) Erzeugen einer von Menschen lesbaren Darstellung (4') des Dokuments auf der Basis des wenigstens einen Datensatzes und des wenigstens einen Semantik-Elements;
c) Verifizieren der Signaturen des Datensatzes und des Semantik-Elements;
d) Vergleichen der ursprünglichen von Menschen lesbaren Darstellung des Dokuments (4*) mit der von Menschen lesbaren Darstellung (4') des **durch** Schritt b) erzeugten Dokuments;
e) Entscheiden im Fall der Identität, dass die von Menschen lesbare Darstellung (4') des **durch** Schritt b) erzeugten Dokuments der ursprünglichen von Menschen lesbaren Darstellung des Dokuments (4) entspricht.

## Revendications

1. Procédé permettant de créer un document interprétable par l'utilisateur (4*) qui, outre au moins un enregistrement de données, comprend au moins un élément d'informations sémantiques décrivant l'enregistrement de données, appelées « sémantique », ledit procédé étant **caractérisé par** les étapes suivantes :
- fourniture de l'au moins un enregistrement de données (1) et de l'au moins un élément sémantique (2) dans un format numérique respectif ;
- signature électronique (3) de l'enregistrement de données et de la sémantique pour produire un enregistrement de données signé (1*) et une sémantique signée (2*), et produire une représentation interprétable par l'utilisateur (4) du document sur la base de l'au moins un enregistrement de données (1) et de l'au moins un élément sémantique (2) ;
- création d'un document interprétable par l'utilisateur (4*) en intégrant l'enregistrement de données signé (1*) et la sémantique signée (2*) dans la représentation interprétable par l'utilisateur (4) de sorte qu'il soit possible d'extraire l'enregistrement de données signé (1*) et la sémantique signée (2*) à partir de la représentation interprétable par l'utilisateur et que l'enregistrement de données signé extrait (1*) et la sémantique signée extraite (2*) puissent être obtenus en tant que base pour la production d'une représentation idempotente interprétable par l'utilisateur du document (4').

2. Procédé selon la revendication 1, dans lequel l'enregistrement de données (1) est représenté à l'aide d'une des normes de langage suivantes : HTML, ASCII, XML, TeX.

3. Procédé selon la revendication 1 ou 2, dans lequel la sémantique (2) est représentée sous la forme d'un modèle dans lequel l'enregistrement de données est entré.

4. Procédé selon la revendication 3, dans lequel le modèle est une feuille de style XSLT dans laquelle l'enregistrement de données sous la forme d'un fichier XML est converti au moyen d'une transformation XSL.

5. Procédé selon une des revendications 1 à 4, dans lequel la représentation interprétable par l'utilisateur (4) choisie est une représentation PDF.

6. Procédé selon une des revendications 1 à 5, dans lequel la représentation interprétable par l'utilisateur du document (4) est produite à l'aide d'un programme FOP, c'est-à-dire d'un processeur de format.

7. Procédé selon une des revendications 1 à 6, dans lequel un enregistrement de données (1) au format XML est signé électroniquement à l'aide d'une norme de signature XML-DSIG.

8. Procédé selon une des revendications 1 à 7, dans lequel l'enregistrement de données signé extrait (1*) et la sémantique signée extraite (2*) sont soumis à une vérification.

9. Procédé selon une des revendications 1 à 8, dans lequel la représentation idempotente interprétable par l'utilisateur du document (4') est soumise à une vérification.

10. Procédé selon une des revendications 1 à 9, dans lequel l'enregistrement de données signé (1*) et la sémantique signée (2*) sont intégrés dans la représentation interprétable par l'utilisateur (4) dans un format chiffré, par exemple un code à barres unidimensionnel ou bidimensionnel ou un filigrane.

11. Document interprétable par l'utilisateur (4*) possédant au moins un enregistrement de données et un élément d'informations sémantiques décrivant l'enregistrement de données, appelées « sémantique », **caractérisé en ce que** le document intègre l'au moins un enregistrement de données (1) et la sémantique (2) dans un format signé électroniquement respectif, de sorte que l'enregistrement de données signé (1*) et la sémantique (2*) puissent être extraits du document (4*) et que l'enregistrement de données signé extrait (1*) et la sémantique signée extraite (2*) puissent être obtenus en tant que base pour la production d'une représentation idempotente interprétable par l'utilisateur du document (4').

12. Document interprétable par l'utilisateur (4*) selon la revendication 11, dans lequel l'enregistrement de données signé (1*) et la sémantique signée (2*) sont intégrés dans la représentation interprétable par l'utilisateur du document (4) dans un format non perceptible par l'utilisateur.

13. Document interprétable par l'utilisateur (4*) selon la revendication 12, dans lequel le format non perceptible par l'utilisateur est un filigrane.

14. Document interprétable par l'utilisateur (4*) selon la revendication 13, dans lequel l'enregistrement de données signé (1*) et la sémantique signée (2*) sont intégrés dans la représentation interprétable par l'utilisateur du document (4) sous la forme d'un code à barres.

15. Procédé permettant de vérifier un document interprétable par l'utilisateur (4*) possédant au moins un enregistrement de données signé (1*) et au moins un élément signé d'informations sémantiques (2*) décrivant l'enregistrement de données, appelées « sémantique »,
**caractérisé par** les étapes suivantes :
a) extraction et fourniture (7), dans un format numérique, de l'au moins un enregistrement de données signé (1*) et de l'au moins une sémantique signée (2*) ;
b) production d'une représentation interprétable par l'utilisateur (4') du document sur la base de l'au moins un enregistrement de données et de l'au moins un élément de sémantique ;
c) vérification des signatures dudit enregistrement de données et dudit élément de sémantique ;
d) comparaison de la représentation d'origine interprétable par l'utilisateur du document (4*) à la représentation interprétable par l'utilisateur (4') du document telle que produite par l'étape b) ;
e) dans le cas d'une identité, décision que ladite représentation interprétable par l'utilisateur (4') du document telle que produite par l'étape b) correspond à ladite représentation d'origine interprétable par l'utilisateur du document (4).
